# EUROPEAN PATENT APPLICATION

(11) **EP 2 866 171 A2**
(43) Date of publication of application: **29.04.2015**
(21) Application number: 14189700.9
(22) Date of filing: 21.10.2014
(51) Int. Cl.: G06K 9/46

(54) **Object detection method and device**

(30) Priority: 24.10.2013 CN 201310508594
(71) Applicant: Ricoh Company, Ltd., Tokyo 143-8555 (JP)
(72) Inventor: Liu, Dianchao, 100044 Haidian District (CN); Lu, Yaojie, 100044 Haidian District (CN); Liu, Yuan, 100044 Haidian District (CN); Shi, Zhongchao, 100044 Haidian District (CN); Hu, Ping, 100044 Haidian District (CN)
(74) Representative: Maury, Richard Philip

(57) **Abstract**

Disclosed is a method of detecting a to-be-detected object in an image. The method includes steps of receiving the image; extracting an edge in the image; performing segmentation on the edge so as to obtain plural edge segments; obtaining relational data of first and second angles of a sample object in a sample image; for each of the plural edge segments, obtaining an absolute angle and a relative angle associated with the absolute angle, and generating a third straight line from a predetermined point on this edge segment, an angle between the third line and this edge segment being equal to the relative angle; determining one from among intersection points of the third straight lines to serve as a reference point of the to-be-detected object; retaining edge segments whose corresponding third straight lines pass through the reference point; and detecting the to-be-detected object based on the retained edge segments.

## Description

### BACKGROUND OF THE INVENTION

### 1. Field of the Invention

The present invention generally relates to the field of image processing, and particularly relates to an object detection method and device.

### 2. Description of the Related Art

A lot of techniques for detecting an object with a specific shape in an image have been proposed up to now.

For example, in "Generalizing the Hough Transform to Detect Arbitrary Shapes" (D. H. Ballard, University of Rochester, Patterns Recognition 13.2:111-122, 1981), a method is disclosed in which the Hough Transform is generalized for detecting an object with any shape. The purpose of this method is to detect an object having any shape. In particular, all points on edges of an image are scanned, and then a parameter pair set is recorded in which each pair is formed by an angle and a distance, and is mapped to the corresponding Hough space.

Furthermore, in "A Unified Approach Based on Hough Transform for Quick Detection of Circles and Rectangles" (QIN Kaihuai, WANG Haiying, and ZHENG Jitao, Tsinghua University, Vol. 15, No. 1, Journal of Image and Graphics, Jan. 2010), a technique is disclosed in which the Hough Transform is utilized for rapidly distinguishing between a circle and a rectangle. In particular, angle information is used for obtaining cumulative shape and angle values, and then on the basis of them, the corresponding object shape is distinguished.

### SUMMARY OF THE INVENTION

The aim of the present invention is to provide an object detection method and device by which it is possible to accurately locate and detect an object in an image without the influence of the size change of the object.

According to a first aspect of the present invention, a method of detecting a to-be-detected object in an image is provided. The method includes:
a step of receiving the image;
a step of extracting at least one edge in the image;
a step of performing segmentation on the edge in the image so as to obtain plural edge segments;
a step of obtaining relational data of at least one set of first and second angles of a sample object in at least one sample image, wherein, the first angle is associated with the second angle, the first angle refers to an angle between an edge segment of the sample object and a first straight line along a predetermined direction, and the second angle refers to an angle between the edge segment of the sample object and a second straight line passing through a predetermined point on the edge segment of the sample object and a reference point of the sample object;
a step of, for each of the obtained plural edge segments, obtaining an angle between the corresponding edge segment and a first straight line along the predetermined direction to serve as an absolute angle; obtaining, based on the absolute angle and the relational data, a relative angle associated with the absolute angle; and generating a third straight line from a predetermined point on the corresponding edge segment, wherein, an angle between the corresponding edge segment and the third straight line is equal to the relative angle;
a step of determining one from among intersection points of the third straight lines based on a number of third straight lines passing through each of the intersection points to serve as a reference point of the to-be-detected object;
a step of retaining one or more edge segments whose corresponding third straight lines pass through the reference point of the to-be-detected object; and
a step of detecting the to-be-detected object based on the retained edge segments.

According to a second aspect of the present invention, a device for detecting a to-be-detected object in an image is provided. The device includes:
an image receipt part configured to receive the image;
an edge extraction part configured to extract at least one edge in the image;
an edge segmentation part configured to perform segmentation on the edge in the image so as to obtain plural edge segments;
a relationship obtention part configured to obtain relational data of at least one set of first and second angles of a sample object in at least one sample image, wherein, the first angle is associated with the second angle, the first angle refers to an angle between an edge segment of the sample object and a first straight line along a predetermined direction, and the second angle refers to an angle between the edge segment of the sample object and a second straight line passing through a predetermined point on the edge segment of the sample object and a reference point of the sample object;
an absolute angle obtention part configured to, for each of the obtained plural edge segments, obtain an angle between the corresponding edge segment and a first straight line along the predetermined direction to serve as an absolute angle;
a relative angle obtention part configured to, for each of the obtained plural edge segments, obtain, based on the absolute angle of the corresponding edge segments and the relational data, a relative angle associated with the absolute angle of the corresponding edge segments;
a straight line generation part configured to, for each of the obtained plural edge segments, generate a third straight line from a predetermined point on the corresponding edge segment, wherein, an angle between the corresponding edge segment and the third straight line is equal to the relative angle;
a reference point determination part configured to determine one from among intersection points of the third straight lines based on a number of third straight lines passing through each of the intersection points to serve as a reference point of the to-be-detected object;
an edge segment retaining part configured to retain one or more edge segments whose corresponding third straight lines pass through the reference point of the to-be-detected object; and
an object detection part configured to detect the to-be-detected object based on the retained edge segments.

By utilizing the object detection method and device, since a reference point of a to-be-detected object in an image is determined on the basis of a predetermined relationship of absolute and relative angles of a sample object in at least one sample image, it is possible to retain edge segments in the image passing through the reference point of the to-be-detected object so as to detect the to-be-detected object. As a result, it is possible to accurately locate and detect the to-be-detected object in the image without the influence of the size change of the to-be-detected object.

### BRIEF DESCRIPTION OF THE DRAWINGS

FIG. 1 illustrates an object detection system according to an embodiment of the present invention;
FIG. 2 is a block diagram of an object detection device according to an embodiment of the present invention;
FIG. 3 is a flowchart of a method of predetermining, on the basis of at least one sample image, relational data of first and second angles according to an embodiment of the present invention;
FIG. 4A illustrates an example of a disparity map of a vehicle;
FIG. 4B illustrates an example of a relational data structure of first and second angles as well as the corresponding edge segments;
FIG. 4C illustrates an example of a histogram of an angle distribution;
FIG. 4D illustrates an example of a relational data table of first and second angles, including the related weights;
FIG. 5A illustrates third straight lines generated on the basis of the edge segments 1 and 3 shown in FIGS. 4A and 4B;
FIG. 5B illustrates a probability distribution of intersection points of a to-be-detected object;
FIG. 6 is a flowchart of an object detection method of detecting a to-be-detected object in an image according to an embodiment of the present invention; and
FIG. 7 is a block diagram of a computer system suitable to achieve the embodiments of the present invention.

### DETAILED DESCRIPTION OF THE PREFERRED EMBODIMENTS

In order to let those people skilled in the art better understand the present invention, hereinafter the present invention will be concretely described on the basis of the drawings and various embodiments.

The inventors of the present invention found that regarding an object (a to-be-detected object) in an image, having a specific shape, it is possible to detect the to-be-detected object by detecting its shape, and in order to avoid as much as possible the influence of the size change of the to-be-detected object due to different imaging distances, it is desirable to extract a basically invariant property regardless of the size change of the to-be-detected object. As a result, the inventors made a proposal as follows. It is possible to extract at least one edge segment of a sample object corresponding to the to-be-detected object, in at least one sample image, and to determine a fixed reference point of the sample object; then to determine an absolute angle (a first angle) of the edge segment itself, and to determine a relative angle (a second angle) on the basis of the edge segment and the fixed reference point; and then to store the first angle associated with the second angle so as to obtain a predetermined relationship of first and second angles. After receiving the image including the to-be-detected object, it is possible to extract an edge segment in the image, and to determine the absolute angle of the edge segment itself; then, on the basis of the absolute angle of the edge segment itself as well as the predetermined relationship of first and second angles, to obtain a relative angle associated with the absolute angle so that it is possible to determine a reference point of the to-be-detected object; and then to retain at least one edge segment so that it is possible to detect, on the basis of the retained edge, the to-be-detected object.

In what follows, for the sake of convenience, a road-related object such as a vehicle is taken as an example of a to-be-detected object. However, it should be noted that the present invention is not limited to this. That is to say, by utilizing the embodiments of the present invention, it is also possible to detect another road-related object such as a pedestrian, a building, or the like, or to detect other non-road-related object.

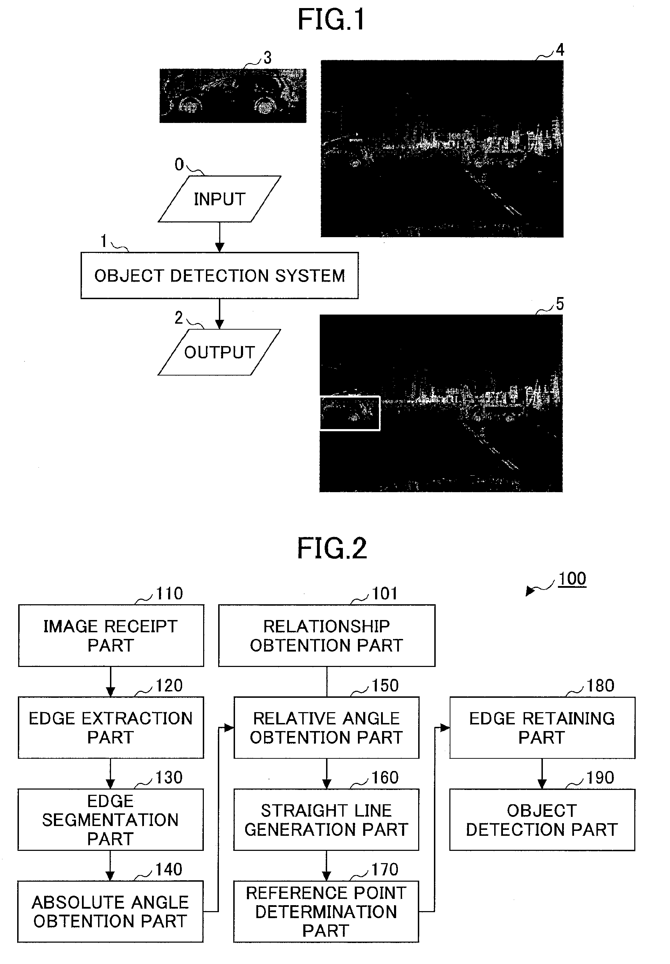

FIG. 1 illustrates an object detection system 1 according to an embodiment of the present invention.

As shown in FIG. 1, an input 0 is a disparity map and/or a corresponding grayscale image. For example, it is possible to obtain the disparity map and the corresponding grayscale image by adopting a two-lens camera provided in a vehicle. In FIG. 1, an image 4 is an example of this kind of corresponding grayscale. After the input 0 is processed by the object detection system 1, an output 2 is output which includes an object detection result. The form of the output 2 varies. For example, it is possible to display the output 2 in a visible form, to prompt the output 2 in an audio form, or to store the output 2 in a textual form. In FIG. 1, an image 5 is an example of the output 2. The image 5 is a grayscale image in which a white rectangle represents the object detection result. In addition, an image 3 in FIG. 1 is an example of a sample image which is also a grayscale image. The image 3 will be utilized below for predetermining a relationship of first and second angles.

Here it should be noted that in FIG. 1, the input 0 of the object detection system 1 is a disparity map and/or a corresponding grayscale image. However, the input 0 may also be right and left images captured by, for example, a two-lens camera. In this case, in the object detection system 1, it is possible to obtain a disparity map on the basis of the right and left images, and to obtain a corresponding grayscale image on the basis of, for example, the left image.

FIG. 2 is a block diagram of an object detection device 100 according to an embodiment of the present invention.

As shown in FIG. 2, the object detection device 100 includes a relationship obtention part 101, an image receipt part 110, an edge extraction part 120, an edge segmentation part 130, an absolute angle obtention part 140, a relative angle obtention part 150, a straight line generation part 160, a reference point determination part 170, an edge segment retaining part 180, and an object detection part 190.

The relationship obtention part 101 is used to obtain relational data of at least one set of first and second angles. The first angle is associated with the second angle. The first angle refers to an angle between an edge segment of a sample object in a sample object image and a first straight line along a predetermined direction, and the second angle refers to an angle between the edge segment and a second straight line passing through a predetermined point on the edge segment and a predetermined reference point of the sample object.

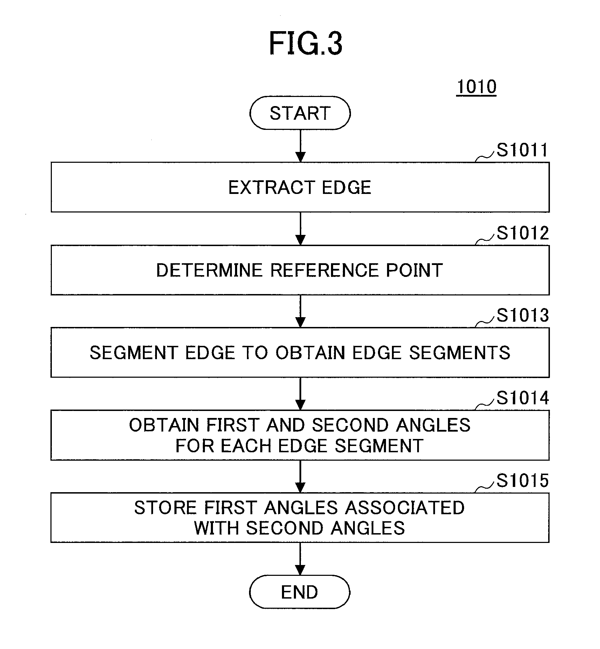

The relational data of first and second angles may be obtained from at least one sample image, for example, the image 3 shown in FIG. 1. In what follows, by referring to FIG. 3, a method of predetermining this kind of relational data of first and second angles will be given.

FIG. 3 is a flowchart of a method 1010 of predetermining, on the basis of at least one sample image, relational data of first and second angles according to an embodiment of the present invention.

Predetermining the relational data of first and second angles may be regarded as sample training. In particular, by analyzing at least one sample image including a sample object, it is possible to obtain a relationship of the first angle of at least one edge segment itself of the sample object and the relative angle of the same edge segment with respect to a predetermined reference point of a sample object, and to store the relationship as relational data. The relational data is used to help locate and detect, after an image including a to-be-detected object is input, the to-be-detected object by determining a reference point of the to-be-detected object on the basis of the relational data. This kind of sample training may be conducted in real time or off time (i.e., in advance).

The input of the sample training is at least one sample image, for example, the image 3 shown in FIG. 1. In an example, it may be a manually extracted part of an image including a sample object.

As shown in FIG. 3, in STEP S1011, at least one edge of a sample object in the sample image is extracted. As for an edge detection and extraction method, it is possible to adopt any known method, for example, the Sobel edge detection and extraction method. The main purpose of detecting and extracting the edge is to extract the outline information of the sample object and to avoid the noise influence. For more information about the Sobel operator, it is possible to refer to a paper entitled "Asymptotic Confidence Intervals for Indirect Effects in Structural Equation Models", written by Michael E. Sobel, and published on "Sociological Methodology" in 1982. In addition, the edge detection and extraction method may also be the Canny edge detection and extraction method. After the edge extraction, it is also possible to perform a smoothing or enhancement process on the extracted edge.

In STEP S1012, a predetermined reference point of the sample object is obtained.

The predetermined reference point of the sample object will be used later for calculating a second angle of an edge segment with respect to the predetermined reference point. In an example, the predetermined reference point is the mass center of the sample object. In another example, the predetermined reference point is a corner point of the sample object. In still another example, the predetermined reference point is the center of the circumscribed circle or rectangle of the sample object. Preferably, the mass center of the sample object is taken as the predetermined reference point. The reason is that it is possible to obtain second angles whose distribution is relatively balanced. However, it should be noted that the present invention is not limited to this.

The predetermined reference point may be obtained manually or automatically.

In STEP S1013, the extracted edge of the sample object is segmented so as to obtain plural edge segments.

In an example, it is possible to equably segment the extracted edge.

In an example, the length of each edge segment is predetermined and fixed.

In an example, the length of each edge segment is determined on the basis of the size of the sample object so that each edge segment is or approximates a straight line.

In an example, in a case where the information related to the distance between the sample object and a camera by which the sample image is captured is given, the length of each edge segment depends on the information related to the distance. In general, the longer the distance is, the smaller the size of the sample object in the sample image is. As a result, the longer the distance is, the shorter the length of each edge segment is.

In an example, in a case where the sample image is a disparity map, the length of each edge segment depends on the disparity of the extracted edge. The bigger the disparity of the extracted edge is, the shorter the length of each edge segment is.

Furthermore, in another example, in a case where the sample image is a grayscale image, and the information related to the distance between the sample object and a camera by which the sample image is captured is given (for example, the information related the distance may be obtained by an infrared ray distance sensor or laser range finder), the length of each edge segment depends on the information related to the distance, as described above. In other words, the longer the distance is, the shorter the length of each edge segment is.

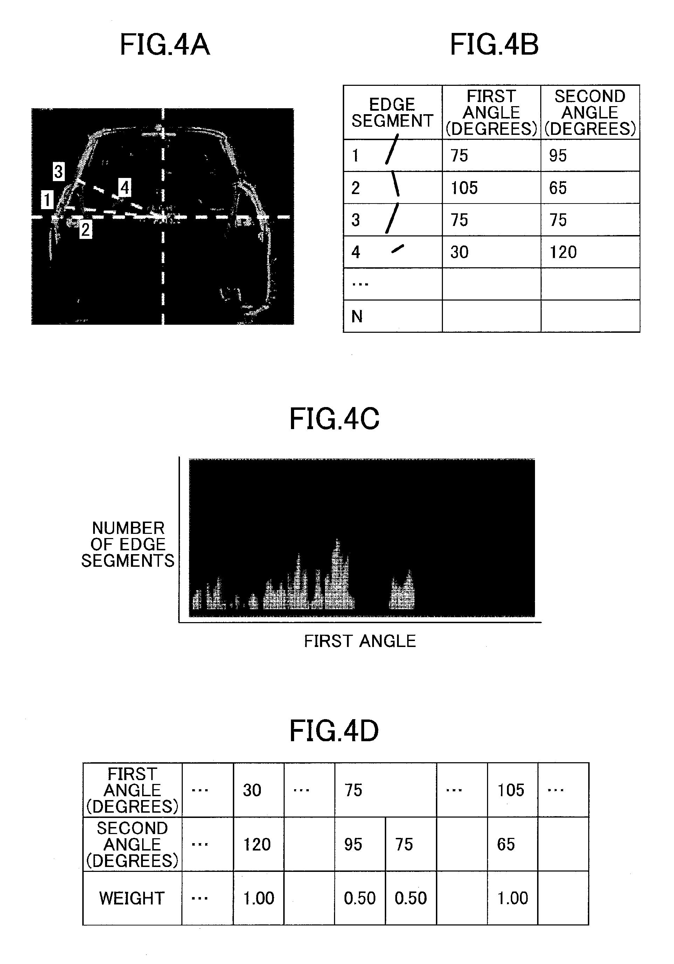

FIG. 4A illustrates an example of a disparity map of a vehicle.

As shown in FIG. 4A, there are four edge segments obtained after the segmentation, and they are represented by 1, 2, 3, and 4, respectively.

In STEP S1014, as for each of the plural edge segments, an angle between this edge segment and a first straight line along a predetermine direction is obtained to serve as a first angle of this edge segment, and an angle between this edge segment and a second straight line passing through a predetermine point on this edge segment and the predetermined reference point of the sample object is obtained to serve as a second angle of this edge segment with respect to the predetermined reference point.

In an example, the first angle of an edge segment is represented by an angle between the edge segment and a horizontal straight line. That is to say, the first straight line is a horizontal straight line. Of course, the present invention is not limited to this. For example, the first straight line may also be a vertical straight line. In an example, an angle obtained when the edge segment rotates clockwise to the first straight line serves as the first angle of the edge segment. The range of the first angle of the edge segment is 0 to 180 degrees.

In an example, the second angle of an edge segment with respect to a predetermined reference point is obtained as follows. A second straight line connecting a predetermined point on the edge segment and the predetermined reference point is obtained. After that, an angle is obtained when the second straight line rotates clockwise to the edge segment, so as to serve as the second angle. In an example, the predetermined point on the edge segment is the middle point of the edge segment. In another example, the predetermined point on the edge segment is one of its two ends (for example, its left end or upper end).

FIG. 4B illustrates an example of a relational data structure of first and second angles as well as the corresponding edge segments on the basis of FIG. 4A.

As shown in FIG. 4B, regarding an edge segment 1, its first angle is 75 degrees, and its second angle is 95 degrees; regarding an edge segment 2, its first angle is 105 degrees, and its second angle is 65 degrees; regarding an edge segment 3, its first angle is 75 degrees, and its second angle is 75 degrees; and regarding an edge segment 4, its first angle is 30 degrees, and its second angle is 120 degrees.

In STEP S1015 of FIG. 3, the obtained first angles are stored which are respectively associated with the obtained second angles.

In an example, the statistical information of first and second angles is calculated on the basis of the distribution of angles. For example, as for the relational data of first and second angles shown in FIG. 4B, there are two edge segments whose first angle is 75 degrees, and the associated second angles are 95 and 75 degrees; there is one edge segment whose first angle is 30 degrees, and the associated relative angle is 120 degrees; and so on. In an example, on the basis of this kind of statistical information, it is possible to obtain a histogram of the distribution of angles.

FIG. 4C illustrates an example of a histogram of an angle distribution.

As shown in FIG. 4C, the histogram is a two-dimensional one. It records, for each first angle, the number of edge segments having a pair of this first angle and the associated second angle.

In an example, on the basis of the statistical information of first and second angles, it is possible to store the first and second angles as well as the related probabilities (weights) in a table.

FIG. 4D illustrates an example of this kind of table of first and second angles as well as the related weights.

Here it should be noted that the table shown in FIG. 4D is obtained on the basis of the relational data structure shown in FIG. 4B. As shown in FIG. 4D, since there is one edge segment whose first angle is 30 degrees, and because its associated second angle is 120 degrees (see FIG. 4B), the probability (weight) of the first angle 30 degrees with respect to the second angle 120 degrees is 1.00; since there are two edge segments whose first angle is 75 degrees, and because their associated second angles are 95 and 75 degrees (see FIG. 4B), the probabilities (weights) of the first angle 75 degrees with respect to the second angles 95 and 75 degrees is 0.50; and so on.

Actually, the distribution of angles is more complicated. Accordingly, it is also possible to carry out statistical analysis with respect to the first and second angles of respective edge segments and to store the results, so as to build a relational data table of the first and second angles as well as the related weights.

In addition, in the relational data table shown in FIG. 4D, the first and second angles as well as the related weights are stored, and the related weights are obtained on the basis of the occurrence probability of each first angle. In an example, however, it is possible to obtain the related weights on the basis of the occurrence probability of each second angle. Furthermore, in another example, it is also possible to only store the first and second angles. In this case, the related weights are considered the same.

Referring to FIG. 2 again; finally, the relationship obtention part 101 obtains relational data like that shown in FIG. 4D.

Here it should be noted that the relational data table obtained by the relationship obtention part 101 may be calculated by the object detection device 100 itself, or may be acquired from outside the object detection device 100. Moreover, the relational data table may be obtained by carrying out training in real time or off time (in advance).

The image receipt part 110 is used to remotely or locally receive an image including a to-be-detected object. For example, vehicle detection is taken as an instance. In a case where an image capture device such as a two-lens camera, a multi-lens camera, or the like is provided at the front part of a vehicle, and the object detection device 100 is incorporated into the automatic control system of the vehicle, it is possible to use, for example, a USB (Universal Serial Bus) cable to directly obtain an image from the image capture device. However, it is also possible to receive an image via remote communications, for example, wired or wireless communications.

The image may be a disparity map or a grayscale image. In a case where the image is a disparity map, the image itself brings distance or depth information. In a case where the image is a grayscale image, it is also possible to provide distance information between the to-be-detected object and a camera by which the image is captured to the grayscale image using, for example, an infrared ray distance sensor or laser range finder.

The edge extraction part 120 is used to extract at least one edge from the image. Similarly, as for an edge detection and extraction method, it is possible to adopt any known method, for example, the Sobel edge detection and extraction method. For more information about the Sobel operator, it is possible to refer to a paper entitled "Asymptotic Confidence Intervals for Indirect Effects in Structural Equation Models", written by Michael E. Sobel, and published on "Sociological Methodology" in 1982. In addition, the edge detection and extraction method may also be the Canny edge detection and extraction method. After the edge extraction, it is also possible to perform a smoothing or enhancement process on the extracted edge.

Here it should be noted that before carrying out the edge extraction, it is possible to conduct some additional processes. For example, it is possible to remove a part of the image, obviously not including the to-be-detected object so as to decrease the amount of calculation of the follow-on process.

The edge segmentation part 130 is used to segment the extracted edge so as to obtain plural edge segments.

In an example, the extracted edge is segmented equally. Here it should be noted that the extracted edge may be segmented as done in STEP S1013 of FIG. 3.

As described above, preferably, in a case where the distance information between the to-be-detected object and the camera is given, the length of each edge segment is determined on the basis of the distance information. For example, in a case where it is estimated, according to the distance information, that the size of the to-be-detected object in the image increases approximately 20%, the length of each edge segment may be increased 20% too.

The absolute angle obtention part 140 is used to, for each of the plural edge segments, obtain an angle between this edge segment and a first straight line along a predetermined direction to serve as an absolute angle of this edge segment, as done in STEP S1014 of FIG. 3.

The relative angle obtention part 150 is used to, for each of the plural edge segments, obtain, on the basis of the absolute angle of this edge segment obtained by the absolute angle obtention part 140 and the relational data of first and second angles obtained by the relationship obtention part 101, a relative angle associated with the absolute angle of this edge segment.

In particular, regarding an edge segment, if the absolute angle of the edge segment is obtained by the absolute angle obtention part 140, then by utilizing this absolute angle to lookup a relational data table of first and second angles by the relationship obtention part 101 (see FIG. 4D), it is possible to obtain the relative angle(s) and related weight(s) associated with the absolute angle of the edge segment.

For example, in a case where the relational data table shown in FIG. 4D is taken as an instance, if the obtained absolute angle is 75 degrees, then it is possible to obtain the associated relative angles, i.e., 95 and 75 degrees, and to obtain the associated related weights, i.e., 0.5 and 0.5; if the obtained absolute angle is 30 degrees, then it is possible to obtain the associated relative angle, i.e., 120 degrees, and to obtain the associated related weight, i.e., 1.0; and if the obtained absolute angle is 105 degrees, then it is possible to obtain the associated relative angle, i.e., 65 degrees, and to obtain the associated related weight, i.e., 1.0.

In this way, the relative angle obtention part 150 may obtain, for each of the plural edge segments, the relative angle(s) and related weight(s) associated with the absolute angle of this edge segment.

Here it should be noted that sometimes there is a case where regarding an obtained absolute angle of an edge segment, there doesn't exist a corresponding absolute angle in the relational data table.

In this case, it is possible to skip (discard) the edge segment.

Alternatively, in an example, it is possible to seek an absolute angle in the relational data table, which is nearest the obtained absolute angle, and then to obtain a relative angle in the relational data table, which is associated with the sought absolute angle, so as to serve as the relative angle associated with the obtained absolute angle.

Alternatively, in another example, it is possible to seek an absolute angle in the related relational data table, and to determine whether the difference between the obtained absolute angle and the sought absolute angle is less than a predetermined threshold value. If the difference is less the predetermined threshold value, then it is possible to obtain a relative angle in the related relational data table, which is associated with the sought absolute angle, so as to serve as the relative angle associated with the obtained absolute angle.

The straight line generation part 160 is used to generate, for each of the plural edge segments, a third straight line from a predetermined point on this edge segment on the basis of the relative angle of this edge segment, obtained by the relative angle obtention part 150; that is to say, the angle between this edge segment and the generated straight line is equal to the relative angle.

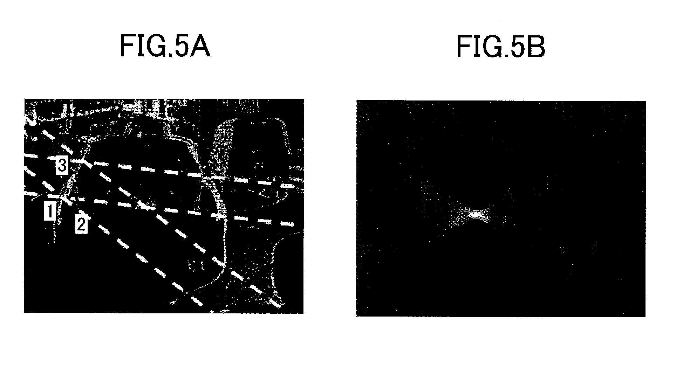

FIG. 5A illustrates third straight lines generated on the basis of the edge segments 1 and 3 whose absolute angles are both 75 degrees, as shown in FIGA. 4A and 4B.

As described above, regarding the absolute angle 75 degrees, there are two associated relative angles, i.e., 95 and 75 degrees, respectively, and the related weights are both 0.50 (see FIG. 4D). As a result, as shown in FIG. 5A, on the basis of the edge segment 1, two third straight lines are generated from the middle point of the edge segment 1, and the angles between the edge segment 1 and the generated two third straight lines are 95 and 75 degrees, respectively. Similarly, on the basis of the segment 3, two third straight lines are generated from the middle point of the edge segment 3, and the angles between the edge segment 3 and the generated two third straight lines are 95 and 75 degrees, respectively.

In this way, it is possible to generate, for each of the plural edge segments, a straight line(s) corresponding to this edge segment.

The reference point determination part 170 is used to determine a reference point of the to-be-detected object from among the intersection points of the third straight lines on the basis of the number of third straight lines passing through each of the intersection points.

The third straight lines of the respective edge segments generated by the straight line generation part 160 intersect at different points (intersection points). The reference point determination part 170 analyzes the existence probabilities of the respective intersection points so as to determine the reference point of the to-be-detected object.

In an example, the number of third straight lines passing through each intersection point is obtained, and then an intersection point corresponding to the maximum number of third straight lines is determined as the reference point of the to-be-detected object.

In another example, each third straight line is given the related weight of the associated relative angle on the basis of which this third straight line is generated (see FIG. 4D). After that, the reference point of the to-be-detected object is determined on the basis of the number of third straight lines considering the related weights, passing through each intersection point. That is to say, an intersection point, that the number of third straight lines considering the related weights is maximum, is determined as the reference point of the to-be-considered object.

From another point of view, each intersection point may be give an existence probability on the basis of the number of third straight lines passing through this intersection point and the related weights, so that it is possible to obtain a probability distribution of intersection points on the to-be-detected object.

FIG. 5B illustrates a probability distribution of intersection points on a to-be-detected object.

As shown in FIG. 5B, an intersection point whose brightness is highest (i.e., an intersection point whose probability is highest) may be determined as the reference point of the to-be-detected object.

The edge segment retaining part 180 is used to determine an edge segment (at least one) where a third straight line generated from a predetermined point on the edge segment passes through the determined reference point of the to-be-detected object, and to retain this edge segment. The reason is that an edge segment, which contributes to determining the reference point of the to-be-detected object, is more likely to be an edge segment of the to-be-detected object. As a result, these kinds of edge segments should be retained, and others should be removed.

In an example, by conducting a smoothing and filtering process or a central clustering method, it is possible to calculate the degrees of clustering of the retained edge segments. After that, it is possible to determine a position, where the degree of clustering is highest, as the position of the to-be-detected object, and then, on the basis of the determined position of the to-be-detected object, to further remove a retained edge segment considered as noise.

The object detection 190 is used to detect the to-be-detected object on the basis of the retained edge segments. Here it should be noted that any object detection method on the basis of edges may be adopted in the embodiments of the present inventions. For example, it is possible to verify the outline formed by the retained edge segments by using at least one of a length range, a width range, and an aspect ratio of a known object, to conduct verification by using a corner point feature of a known object, or to perform matching by using a shape template of a known object.

The object detection part 190 may output the visible shape information or the textual location information of the detected result.

As a result, by utilizing the object detection device 100 according to the embodiments of the present invention, it is possible to accurately locate and detect a to-be-detected object in an image without the influence of the size change of the to-be-detected object. The reason is that a reference point of the to-be-detected object is determined on the basis of a predetermined relationship between first and second angles of a sample object corresponding to the to-be-detected object, then the edge segments of the to-be-detected object are retained on the basis of the reference point, and then the to-be-detected object is detected on the basis of the retained edge segments.

Here it should be noted that in the above-described examples, the relative angle of an edge segment is indicated by the angle between the edge segment itself and a second straight line passing through the edge segment (i.e., a predetermined point on the edge segment) and the reference point of the to-be-objected object. In an example, however, the relative angle of the edge segment may also be indicated by the angle between the second straight line and a predetermined another straight line along a predetermined direction, for example, a horizontal or vertical line.

Furthermore, it should be noted that in the above example, although the horizontal or vertical line is taken as an example of the predetermined other straight line along the predetermined direction, in another example, it is also possible to detect the surface of a road in advance, and then to let a straight line traversing the road surface, parallel to the road surface serve as the predetermined other straight line along the predetermined direction.

Moreover, it should be noted that an arrow or line shown in FIG. 2 only means that the functions of two parts connected by the arrow or line has a logical relationship; that is to say, the two parts may be directly or indirectly connected for achieving their functions. Additionally, although two parts in FIG. 2 are not connected by an arrow or line, that does not mean the two part do not have a logical relationship. For example, the relationship obtention part 101 may have a logical relationship with the edge extraction part 120, the edge segmentation part 130, and the absolute angle obtention part 140. The edge extraction part 120, the edge segmentation part 130, and the absolute angle obtention part 140 may carry out their functions in the process carried out by the relationship obtention part 101 so as to obtain a relational data table like that shown in FIG. 4D.

In addition, the object detection device 100 may include additional parts for achieving other functions. For example, the object detection device 100 may include a display part and a communications part. The display part is used to display the result detected by the object detection part 190, and the communications part is used to transmit the related information to the outside.

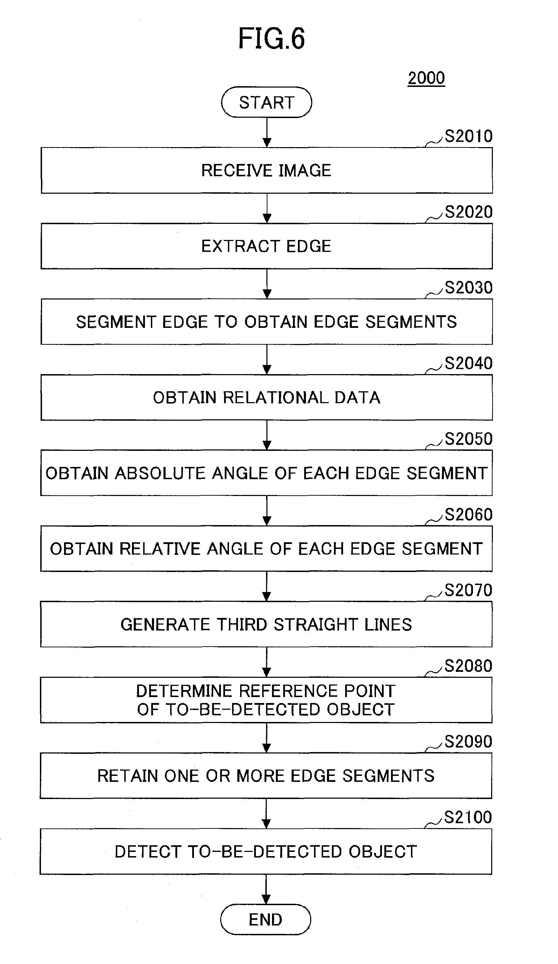

In what follows, an object detection method of detecting a to-be-detected object in an image according to an embodiment of the present invention will be given by referring to FIG. 6.

FIG. 6 is a flowchart of an object detection method 2000 of detecting a to-be-detected object in an image according to an embodiment of the present invention.

As shown in FIG. 6, in STEP S2010, an image including a to-be-detected object is received.

In STEP S2020, at least one edge in the image is extracted.

In STEP S2030, a segmentation process is carried out with respect to the extracted edge so as to obtain plural edge segments.

In STEP S2040, predetermined relational data of at least one set of first and second angles (for example, the relation data shown in the relational data table of FIG. 4D) is obtained. The first angle is associated with the second angle. The first angle indicates the angle between an edge segment of a same object in at least one sample image, corresponding to the to-be-detected object and a first straight line along a predetermined direction, and the second angle indicates the angle between the edge segment of the sample object and a second straight line connecting a predetermined point on the edge segment of the sample object and a predetermined reference point of the sample object.

For each of the plural edge segments obtained in STEP S2030, in STEP S2050, the angle between this edge segment and a first straight line along a predetermined line is obtained to serve as an absolute angle of this edge segment; in STEP S2060, on the basis of the absolute angle of this edge segment and the predetermined relational data of first and second angles, a relative angle associated with the absolute angle of this edge segment is obtained; and in STEP S2070, a third straight line is generated which is passing through a predetermined point on this edge segment, and the angle between this edge segment and the third straight line is equal to the relative angle.

In STEP S2080, a reference point of the to-be-detected object is determined from among the intersection points of the third straight lines on the basis of the number of third straight lines passing through each of the intersection points.

In STEP S2090, at least one edge segment, where a third straight line passes through a predetermined point of this edge segment and the reference point of the to-be-detected object, is retained.

In STEP S2100, the to-be-detected object is detected on the basis of the one or more retained edge segments.

Here it should be noted that the processes of STEPS S2010, S2020, S2030, S2040, S2050, S2060, S2070, S2080, S2090, and S2100 are the same as those carried out by the image receipt part 110, the edge extraction part 120, the edge segmentation part 130, the relationship obtention part 101, the absolute angle obtention part 140, the relative angle obtention part 150, the straight line generation part 160, the reference point determination part 170, the edge segment retaining part 180, and the object detection part 190, respectively; therefore, the repeated descriptions are omitted.

In addition, the above-described object detection device and method according to the embodiments of the present invention may be achieved by a computer system.

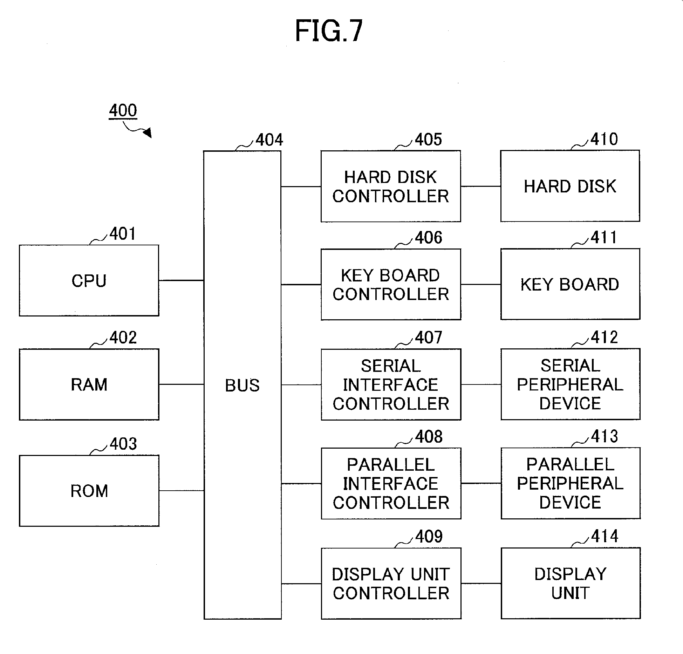

FIG. 7 is a block diagram of a computer system 400 suitable to achieve the embodiments of the present invention.

As shown in FIG. 7, the computer system 400 may include a central processing unit (CPU) 401, a random access memory (RAM) 402, a read-only memory (ROM) 403, a bus 404, a hard disk controller 405, a keyboard controller 406, a serial interface controller 407, a parallel interface controller 408, a display unit controller 409, a hard disk 410, a keyboard 411, a serial peripheral device 412, a parallel peripheral device 413, and a display unit 414. The CPU 401, the RAM 402, the ROM 403, the hard disk controller 405, the keyboard controller 406, the serial interface controller 407, the parallel interface controller 408, and the display unit controller 409 are coupled with the bus 404. The hard disk 410 is coupled with the hard disk controller 405. The keyboard 411 is coupled with the keyboard controller 406. The serial peripheral device 412 is coupled with the serial interface controller 407. The parallel peripheral device 413 is coupled with the parallel interface controller 408. The display unit 414 is coupled with the display unit controller 409. It should be noted that the computer system shown in FIG. 7 is just an example, and is not used to restrict the present invention. In some cases, it is also possible to increase or decrease some components.

Here it should be noted that the above respective embodiments are just exemplary ones, and the specific structure and operation of each of them may not be used for limiting the present invention.

Moreover, the embodiments of the present invention may be implemented in any convenient form, for example, using dedicated hardware, or a mixture of dedicated hardware and software. The embodiments of the present invention may be implemented as computer software implemented by one or more networked processing apparatuses. The network may comprise any conventional terrestrial or wireless communications network, such as the Internet. The processing apparatuses may comprise any suitably programmed apparatuses such as a general-purpose computer, personal digital assistant, mobile telephone (such as a WAP or 3G-compliant phone) and so on. Since the embodiments of the present invention can be implemented as software, each and every aspect of the present invention thus encompasses computer software implementable on a programmable device.

The computer software may be provided to the programmable device using any storage medium for storing processor-readable code such as a floppy disk, a hard disk, a CD ROM, a magnetic tape device or a solid state memory device.

The hardware platform includes any desired hardware resources including, for example, a central processing unit (CPU), a random access memory (RAM), and a hard disk drive (HDD). The CPU may include processors of any desired type and number. The RAM may include any desired volatile or nonvolatile memory. The HDD may include any desired nonvolatile memory capable of storing a large amount of data. The hardware resources may further include an input device, an output device, and a network device in accordance with the type of the apparatus. The HDD may be provided external to the apparatus as long as the HDD is accessible from the apparatus. In this case, the CPU, for example, the cache memory of the CPU, and the RAM may operate as a physical memory or a primary memory of the apparatus, while the HDD may operate as a secondary memory of the apparatus.

While the present invention is described with reference to the specific embodiments chosen for purpose of illustration, it should be apparent that the present invention is not limited to these embodiments, but numerous modifications could be made thereto by those people skilled in the art without departing from the basic concept and technical scope of the present invention.

The present application is based on and claims the benefit of priority of Chinese Patent Application No. 201310508594.2 filed on Oct. 24, 2013, the entire contents of which are hereby incorporated by reference.

## Claims

1. A method of detecting a to-be-detected object in an image, comprising:
a step of receiving the image;
a step of extracting at least one edge in the image;
a step of performing segmentation on the edge in the image so as to obtain plural edge segments;
a step of obtaining relational data of first and second angles of a sample object in at least one sample image;
a step of, for each of the plural edge segments, obtaining an angle between the corresponding edge segment and a first straight line along a predetermined direction to serve as an absolute angle; obtaining, based on the absolute angle and the relational data, a relative angle associated with the absolute angle; and generating a third straight line from a predetermined point on the corresponding edge segment, wherein, an angle between the corresponding edge segment and the third straight line is equal to the relative angle;
a step of determining one of intersection points of the third straight lines based on a number of the third straight lines passing through each of the intersection points to serve as a reference point of the to-be-detected object;
a step of retaining one or more of the edge segments whose corresponding third straight lines pass through the reference point of the to-be-detected object; and
a step of detecting the to-be-detected object based on the retained edge segments.

2. The method according to claim 1, further comprising:
a step of obtaining the relational data of the first and second angles of the sample object in the at least one sample image, including
extracting at least one edge of the sample object;
determining a reference point of the sample object;
segmenting the edge of the sample object so as to obtain plural edge segments of the sample object;
for each of the plural edge segments of the sample objects, obtaining an angle between this edge segment and the first straight line along the predetermined direction to serve as the first angle, and obtaining an angle between this edge segment and a second straight line passing through a predetermine point on this edge segment and the reference point of the sample object to serve as the second angle; and
storing the first angles associated with the second angles.

3. The method according to claim 2, wherein:
the reference point of the sample object is a mass center of the sample object.

4. The method according to claim 1 or 2, wherein:
the image is a disparity map, a length of each of the plural edge segments differs according to a disparity of the edge, and the smaller the disparity of the edge is, the shorter the length of the corresponding edge segment is; or
the image is a grayscale image having information of a distance between an object and a camera capturing this object, a length of each of the plural edge segments differs according to the distance, and the longer the distance is, the shorter the length of the corresponding edge segment is.

5. The method according to claim 2, wherein, the storing the first angles respectively associated with the second angles includes:
storing the first angles associated with the second angles as well as weights of the second angles,
wherein,
in the step of determining one of intersection points of the third straight lines based on a number of the third straight lines passing through each of the intersection points to serve as a reference point of the to-be-detected object, the number of third straight lines passing through the corresponding intersection point is one considering the weights of the second angles corresponding to the third straight lines passing through the corresponding intersection point.

6. The method according to claim 5, wherein:
if the absolute angle of the corresponding edge segment is associated with plural second angles, then a weight of each of the second angles is determined based on an occurrence probability of this second angle.

7. The method according to claim 1, wherein:
the predetermined point on the corresponding edge segment is a middle point or one end point of the corresponding edge segment.

8. The method according to claim 1, wherein, if it is impossible to find, in the relational data, a first angle equal to the absolute angle of the corresponding edge segment, then one of the following processes is conducted:
skipping the corresponding edge segment, and then carrying out a process with respect to the next edge segment;
seeking, in the relational data, a first angle closest to the absolute angle of the corresponding edge segment, and then obtaining, in the relational data, a second angle associated with this first angle to serve as the relative angle of the corresponding edge segment; and
finding, in the relational data, a first angle closest to the absolute angle of the corresponding edge segment, then determining whether a difference between this first angle and the absolute angle of the corresponding edge segment is less than a predetermined threshold, and then if the difference is less than the predetermined threshold, obtaining, in the relational data, a second angle associated with this first angle to serve as the relative angle of the corresponding edge segment.

9. A device for detecting a to-be-detected object in an image, comprising:
an image receipt part configured to receive the image;
an edge extraction part configured to extract at least one edge in the image;
an edge segmentation part configured to perform segmentation on the edge in the image so as to obtain plural edge segments;
a relationship obtention part configured to obtain relational data of first and second angles of a sample object in at least one sample image;
an absolute angle obtention part configured to, for each of the plural edge segments, obtain an angle between the corresponding edge segment and a first straight line along a predetermined direction to serve as an absolute angle;
a relative angle obtention part configured to, for each of the plural edge segments, obtain, based on the absolute angle of the corresponding edge segments and the relational data, a relative angle associated with the absolute angle of the corresponding edge segments;
a straight line generation part configured to, for each of the obtained plural edge segments, generate a third straight line from a predetermined point on the corresponding edge segment, wherein, an angle between the corresponding edge segment and the third straight line is equal to the relative angle;
a reference point determination part configured to determine one of intersection points of the third straight lines based on a number of the third straight lines passing through each of the intersection points to serve as a reference point of the to-be-detected object;
an edge segment retaining part configured to retain one or more of the edge segments whose corresponding third straight lines pass through the reference point of the to-be-detected object; and
an object detection part configured to detect the to-be-detected object based on the retained edge segments.

10. The device according to claim 9, further comprising:
a relationship obtention part configured to obtain the relational data of the first and second angles of the sample object in the at least one sample image by
extracting at least one edge of the sample object;
determining a reference point of the sample object;
segmenting the edge of the sample object so as to obtain plural edge segments of the sample object;
for each of the plural edge segments of the sample objects, obtaining an angle between this edge segment and the first straight line along the predetermined direction to serve as the first angle, and obtaining an angle between this edge segment and a second straight line passing through a predetermine point on this edge segment and the reference point of the sample object to serve as the second angle; and
storing the first angles associated with the second angles.
